# EUROPEAN PATENT APPLICATION

(11) **EP 4 411 698 A1**
(43) Date of publication of application: **07.08.2024**
(21) Application number: 22875743.1
(22) Date of filing: 07.09.2022
(51) Int. Cl.: G09F 3/02, B32B 7/06, B32B 27/00, C09J 7/21, C09J 7/38, C09J 201/00, G09F 3/10

(54) **LINERLESS LABEL FOR FLIGHT BAGGAGE**

(30) Priority: 30.09.2021 JP 2021161333
(71) Applicant: Tanimoto, Yoji, Nagoya-shi, Aichi 464-0843 (JP)
(72) Inventor: Tanimoto, Yoji, Nagoya-shi, Aichi 464-0843 (JP)
(74) Representative: HGF
(86) International application number: PCT/JP2022/033541
(87) International publication number: WO 2023/053871

(57) **Abstract**

A linerless label for flight baggage formed of fewer layers is provided. A linerless label 100 includes four layers of a surface base-material layer 110, a tackiness agent layer 120, a glassine paper layer 130, and a pressure-sensitive adhesive layer 140 in this order.

## Description

### TECHNICAL FIELD

The present invention relates to a linerless label for flight baggage.

### BACKGROUND ART

One example of labels usable for baggage tags that are attached to flight baggage is disclosed in Patent Document 1.

### REFERENCE DOCUMENT LIST

### PATENT DOCUMENT

Patent Document 1: JP 2017-116937 A

### SUMMARY OF THE INVENTION

### PROBLEM TO BE SOLVED BY THE INVENTION

The conventional label as described above, however, is formed by stacking a number of layers and a label formed of fewer layers has been demanded.

It is a main object of the present disclosure to provide a label formed of fewer layers.

### MEANS FOR SOLVING THE PROBLEM

The present disclosure provides a linerless label for flight baggage, and the linerless label includes four layers of a surface base-material layer in which a heat-sensitive coloring layer and a resin layer are integrated, a tackiness agent layer, a glassine paper layer, and a pressure-sensitive adhesive layer in this order.

It is preferable that the four layers can be provided all over the linerless label for flight baggage, a tackiness agent of the tackiness agent layer and glassine paper of the glassine paper layer be in direct contact with each other without an interposed substance therebetween, the tackiness agent of the tackiness agent layer adhere to the surface base-material layer and stick to the glassine paper layer so that peeling is possible, and a pressure-sensitive adhesive of the pressure-sensitive adhesive layer adhere to the glassine paper layer, adhere to another pressure-sensitive adhesive, and stick to the surface base-material layer so that peeling is possible. In addition, this pressure-sensitive adhesive layer does not easily adhere to other objects including surfaces of human skin, paper, clothes, and a suitcase.

Moreover, in another aspect, the surface base-material layer may include a plurality of small pieces and one main piece arranged in a length direction of the surface base-material layer, between the small pieces and between the small piece and the main piece, notches may be formed at both ends and fine perforated lines may be formed at a central part in a width direction of the linerless label for flight baggage and the small pieces and the main piece may be connected so that separation is possible.

Furthermore, the present disclosure provides a roll of the aforementioned linerless label for flight baggage, in which a plurality of the linerless labels for flight baggage are connected with a cutoff line therebetween and wound, the cutoff line being formed by a perforated line.

### EFFECTS OF THE INVENTION

The label formed of fewer layers is provided.

### BRIEF DESCRIPTION OF THE DRAWINGS

FIG. 1 is a schematic side view for describing a label wound into a roll shape according to a preferred embodiment of the present disclosure.
FIG. 2 is a schematic top view of the label according to the preferred embodiment of the present disclosure.
FIG. 3 is a schematic longitudinal cross-sectional view of the label in a length direction.
FIG. 4 is a schematic partial enlarged top view of a part B in FIG. 2.
FIG. 5 is a schematic partial enlarged bottom view of the part B in FIG. 2.
FIG. 6 is a schematic top view of a label according to a preferred second embodiment of the present disclosure.

### MODE FOR CARRYING OUT THE INVENTION

Preferred embodiments of the present disclosure will hereinafter be described with reference to the drawings.

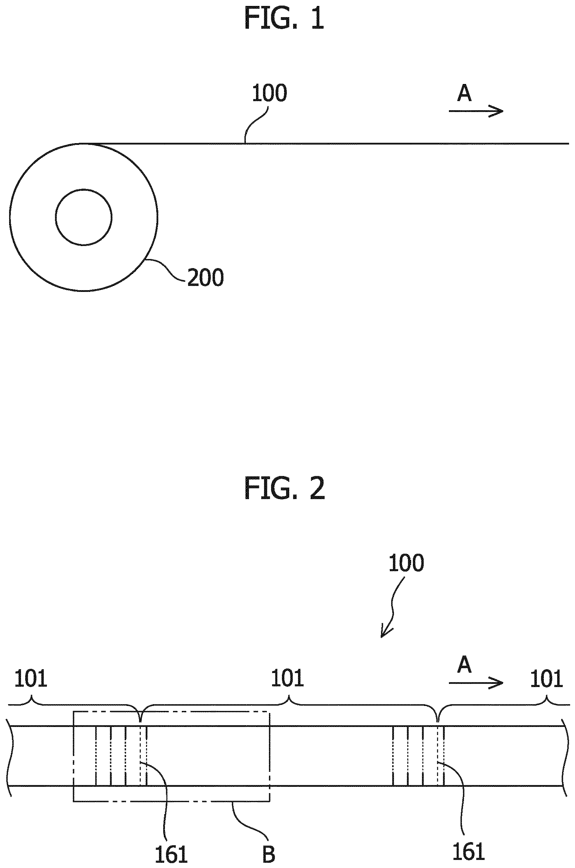

In one example of a label 100 in FIG. 1, the label 100 is provided in a shape of a roll 200 in which the label 100 is wound continuously into a roll shape. The label 100 is extracted from the roll 200 in a direction of arrow A and used. As illustrated in FIG. 2, a plurality of label pieces 101 are formed so as to continue in the direction of arrow A. One label piece 101 is used for a piece of flight baggage to be checked in. Both ends of the label piece 101 have a cutoff line 161 corresponding to a perforated line. When the label piece 101 is printed out from a terminal or an automated baggage drop installed at an airport, a passenger can cut off the label piece 101 by his/her hand. Alternatively, the cutoff line 161 may be omitted and the terminal or the automated baggage drop described above may automatically cut each label piece 101 that is printed and sent.

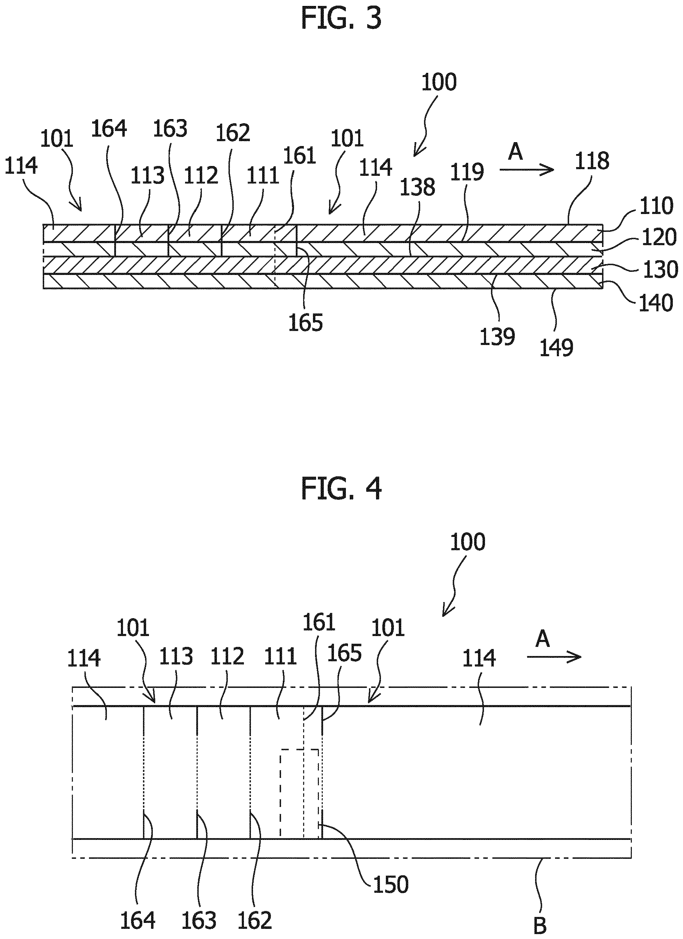

FIG. 3 is a cross-sectional view of this label. Although each layer has the same thickness in order to help the understanding of this example, the actual thickness of each layer is different to a large degree, and the thickness is to be determined as appropriate in accordance with a material to be used, for example. The label 100 includes a surface base-material layer 110, which constitutes an uppermost layer or an outermost layer, a tackiness agent layer 120, a glassine paper layer 130, and a pressure-sensitive adhesive layer 140 in this order.

The surface base-material layer 110 includes a resin layer formed of polyethylene terephthalate (PET), polypropylene (PP), or the like, and high-quality paper that is attached onto the resin layer. This surface base-material layer 110 has a thickness of about 70 µm to 120 µm (DIN 53370) and preferably 80 µm to 110 µm, and has a weight of preferably 60 g/m² to 120 g/m² (DIN 53352). When the resin is PET, the surface base-material layer 110 can be formed in such a manner that a sheet of thin high-quality paper on which a heat-sensitive coloring dye or a heat-sensitive coloring agent used for printing is applied is attached to the resin so as to be integrated. Alternatively, instead of using the high-quality paper, a pigment coating layer can be provided on the resin layer and the heat-sensitive coloring dye can be applied thereon (in the case of PP). As the heat-sensitive coloring dye, for example, a leuco dye-based substance including a leuco dye and a color developing agent is suitably used. Although the color is not limited, black may be preferred in general. It is preferable that an anti-stick agent can be applied on the heat-sensitive coloring dye of the surface base-material layer 110. As the anti-stick agent, for example, polyamide, amide, amide wax, montane wax, ester wax, or other wax can be suitably used.

The tackiness agent layer 120 is provided between a bottom surface 119 of the surface base-material layer 110 and an upper surface 138 of the glassine paper layer 130. While the tackiness agent layer 120 adheres to the surface base-material layer 110 relatively firmly, the tackiness agent layer 120 sticks to the glassine paper layer 130 in a peelable manner. A tackiness agent used for the tackiness agent layer 120 has a characteristic of being able to adhere to a target attachment surface with small pressure because of being viscous and having semi-solid character, and stable uniform adhesive power can be instantaneously obtained when used. An acrylic-based adhesive, a urethane adhesive, or a water-soluble adhesive is suitably used for this tackiness agent. As the water-soluble adhesive, for example, acrylic-based, natural rubber latex-based, synthetic rubber latex-based, and other agents, in which emulsified resin is diffused in water, are suitably used. The initial tackiness of this tackiness agent is preferably 13 N/in to 17 N/in (FTM#9 stainless steel) (1 in is equal to 2.54 cm). The attachment surfaces to be considered include surfaces of cardboard, vinyl packaging materials, suitcases, and the like. Note that the term "adhesion" or "bonding" in this specification means the phenomenon that occurs based on a force that operates when two objects are brought into contact with each other to make molecules attract each other, and by this phenomenon, the objects are bonded to each other. On the other hand, the term "tackiness" can be regarded as one kind of adhesion but also as having peelable character.

The glassine paper layer 130 is made up of or consists of glassine paper. The glassine paper uses sulfite pulp that is finely beaten as an ingredient, and is normally manufactured by the high-pressure processing of the sulfite pulp using rollers with smooth surface called "super calender." In this process, the fiber of the pulp is compressed and flattened, so that internal spacings are nearly lost. Accordingly, the surface becomes smooth and glossy, and has oil and water resistance. This glassine paper may be white glassine paper with a thickness of 50 µm to 90 µm, preferably 60 µm to 80 µm (ISO 534), and a weight of 60 g/m² to 90 g/m² (ISO 536). The tackiness agent used for the aforementioned tackiness agent layer 120 is selected so as to stick relatively strongly to the surface base-material layer 110 formed of the resin layer, and to peel easily from the glassine paper layer 130. Also, it should stick to or adhere to the surface of cardboards or suitcases with sufficient strength. Once the glassine paper layer 130 is removed, this tackiness agent layer 120 sticks to the surface of the cardboard or a suitcase with the sufficient strength; thus, the label piece 101 can be directly attached to the surfaces of cardboard boxes, baggage packaged with vinyl, or suitcases that do not have handles. Since the glassine paper layer 130 itself can easily peel from the tackiness agent layer 120, it is unnecessary to additionally provide a plastic layer or the like that constitutes a peeling layer between the glassine paper layer 130 and the tackiness agent layer 120.

A pressure-sensitive adhesive (also referred to as adhesive) of the pressure-sensitive adhesive layer 140 refers to an adhesive that adheres immediately upon application of pressure at room temperature, and that is not cured but has the stickiness or cohesiveness causing adhesion and retention. For example, a pressure-sensitive adhesive having a self-adhering property, which is observed in natural rubber, may be selected to firmly adhere to another pressure-sensitive adhesive and not to easily adhere to other materials. Accordingly, the pressure-sensitive adhesives (application surfaces thereof), which are often called "adhere" or "cold-seal type", can form the pressure-sensitive adhesive layers that adhere strongly to each other even with application of small pressure and do not adhere to other materials such as paper, clothing, skin including hands, and suitcases. Here, a natural rubber-based tackiness agent and an acrylic-based tackiness agent are suitably used. The pressure-sensitive adhesive layer 140 may be provided all over a lower surface 139 of the glassine paper layer 130. When the pressure-sensitive adhesive layers 140 are pressed to each other, its application surfaces will adhere to each other firmly and will not peel even from the glassine paper layer 130. Therefore, when a passenger or a ground staff member loops the label piece 101 through a handle of a suitcase, for example, and attaches both ends of the label piece 101 together so that the pressure-sensitive adhesive layers 140 are overlapped on each other, the label piece 101 will not easily separate from the handle.

While the pressure-sensitive adhesive layers 140 adhere to each other strongly when pressed by fingers, the pressure-sensitive adhesive layer 140 does not easily adhere to hands, clothing, paper, or other materials. The pressure-sensitive adhesive layer 140 does not adhere to an upper surface 118 of the surface base-material layer 110 either and is loosely bonded to the upper surface 118 because of its viscosity. Therefore, if the label 100 is wound into a roll shape as the roll 200 (see FIG. 1), the pressure-sensitive adhesive layer 140 is also bonded suitably to, or simply overlaps with, the upper surface 118 of the heat-sensitive coloring paper layer 110 on an inner side of the previous turn but can be easily separated. Due to such a characteristic of the pressure-sensitive adhesive layer 140, it is unnecessary to provide a peeling paper layer below its lower surface 149. The pressure-sensitive adhesive layer 140 may preferably be provided entirely in a length direction and a lateral direction of the label piece 101, but it may also be provided partially. As this pressure-sensitive adhesive, preferably, an adhesive containing about 40% of a natural rubber-based material (for example, natural rubber latex), about 5% of silica, and about 50% of water (before drying) can be used suitably. In order to obtain sufficient adhesive strength, the viscosity should preferably be high (for example, 1000 to 4000 mPa·s, B type, 6 rpm). The glassine paper can be coated with this adhesive by a roll coater, a knife coater, or the like and dried at about 60°C. After drying, the pressure-sensitive adhesive adheres strongly to the glassine paper but does not easily adhere to other objects to which the pressure-sensitive adhesive is not applied or to surfaces of paper, clothing, hands, suitcases, or the like.

The label piece 101 according to this embodiment is configured as a linerless label without peeling paper. Therefore, it is unnecessary to dispose trash that is generated when the peeling paper is peeled to expose the tackiness agent. This is very advantageous when a passenger checks in baggage by himself/herself. While the pressure-sensitive adhesive layer 140 does not easily adhere to hands, clothing, paper, or the like, the passenger can securely attach a baggage tag to his/her suitcase or the like by himself/herself by having the pressure-sensitive adhesive layers 140 adhere to each other as the tag is placed around the handle of the baggage, for example.

Once the glassine paper layer 130 is peeled from the tackiness agent layer 120 and the tackiness agent layer 120 is exposed, the label piece 101 according to this embodiment can be directly attached to the surface of the suitcase that does not have a handle or the cardboard box with this tackiness agent layer 120. This enables the passenger to attach the label piece 101 by him or herself, the handling becomes easy for both the passengers and the ground staff. In some cases of the existing labels for flight baggage, it has been necessary to prepare other label pieces for the cardboard or only the ground staffs can attach the label piece.

In FIG. 2 and FIG. 3, the cutoff line 161 is provided between the label pieces 101. In FIG. 2, the cutoff line 161 is a perforated line provided ranging from the upper surface 118 of the surface base-material layer 110 to the pressure-sensitive adhesive layer 140. By cutting the label 100 along the cutoff line 161, the plurality of label pieces 101 are formed.

As illustrated in FIG. 4, for example, a cutting mark 150 representing the position of the cutoff line 161 can be printed in advance on the lower surface 139 of the glassine paper layer 130. This is a bar-shaped mark printed in black, grey, or the like on the label piece 101 entirely or partially in the width direction. The cutting mark 150 can be provided so that the cutoff line 161 comes to a position inside this cutting mark 150 or a position along the cutting mark 150 in the direction of arrow A where the label 100 is extracted from the roll 200. The cutting mark 150 can be used when the automated baggage drop detects a cutting position of the label 100. Even if there is print on the front surface 118 of the label piece 101, the cutting mark 150 is easily detectable from the back surface side. As described above, the cutoff line 161 may be omitted and the terminal or the automated baggage drop machine may cut the label 100 with a cutter at the cutting mark 150.

In FIG. 3 and FIG. 4, the surface base-material layer 110 of the label piece 101 can be formed so as to be separated into small pieces (stubs) 111, 112, and 113, and a main piece 114 in this order when viewed from the direction of arrow A. In the direction of arrow A, the small piece 111 exists between the cutoff line 161 and a separation line 162, the small piece 112 exists between the separation line 162 and a separation line 163, the small piece 113 exists between the separation line 163 and a separation line 164, and the main piece 114 exists between the separation line 164 and the next cutoff line 161. Although the number of small pieces is three here, this is arbitrarily chosen. It is possible to omit the small pieces altogether or provide one small piece, two small pieces, or four or more small pieces.

The separation lines 162, 163, and 164 are provided penetrating from the upper surface 118 to the lower surface 119 of the surface base-material layer 110. The separation lines 162, 163, and 164 may penetrate to reach the tackiness agent layer 120 but should not penetrate to reach the glassine paper layer 130. The small piece 111 and the small piece 112 can be separated from each other by the separation line 162, the small piece 112 and the small piece 113 can be separated from each other by the separation line 163, and the small piece 113 and the main piece 114 of the label piece 101 can be separated from each other by the separation line 164. The separation lines 162 to 164 are formed by continuous notches on the outside and fine perforated lines on a central part in the width direction of the label piece 101. In this manner, the small pieces 111 to 113 can keep attached to the main piece 114 while being easily separable by human hands. Even after the label piece 101 is peeled from the glassine paper layer 130 by human hands, the small pieces 111 to 113 are still attached to the main piece 114 in one piece. The main piece 114 is in contact with the glassine paper layer 130 in a large area; thus, it is difficult to peel the main piece 114 from the glassine paper layer 130 but peeling is possible. In order for the fine perforated line to function, the resin of the surface base-material layer 110 is preferably PET. If PP is used, the proper separation along the perforated line may fail.

A separation line (notch and perforated line) denoted by 165 exists in the vicinity of the cutoff line 161 and on the opposite side to the small piece 111, and is formed in order to make the surface base-material layer 110 easily peel from the glassine paper layer 130. Thus, it becomes easier to peel the surface base-material layer 110 with the tackiness agent layer 120 attached, from the glassine paper layer 130 and attach the surface base-material layer 110 to the cardboard or the like with the tackiness agent layer 120.

The upper surface 118 of the surface base-material layer 110 can be printed using a thermal head (not illustrated). As necessary, surfaces of the main piece 114 and the small pieces 111 to 113 described above can be printed. One label piece 101 that is separated along the cutoff line 161 is looped through the handle of the baggage or the like and the pressure-sensitive adhesive layers 140 are made adhere to each other at both ends of the label piece 101 so that the label piece 101 can be attached to the baggage as the baggage tag. Since the passenger can attach the label piece 101 easily by himself/herself, this is very useful for self check-in or for self baggage drop. In addition, the passenger or the ground staff can peel small pieces 111 to 113, and use small pieces 111 to 113 as passenger copies with a barcode or letters printed thereon or attach small pieces 111 to 113 to another place on the baggage.

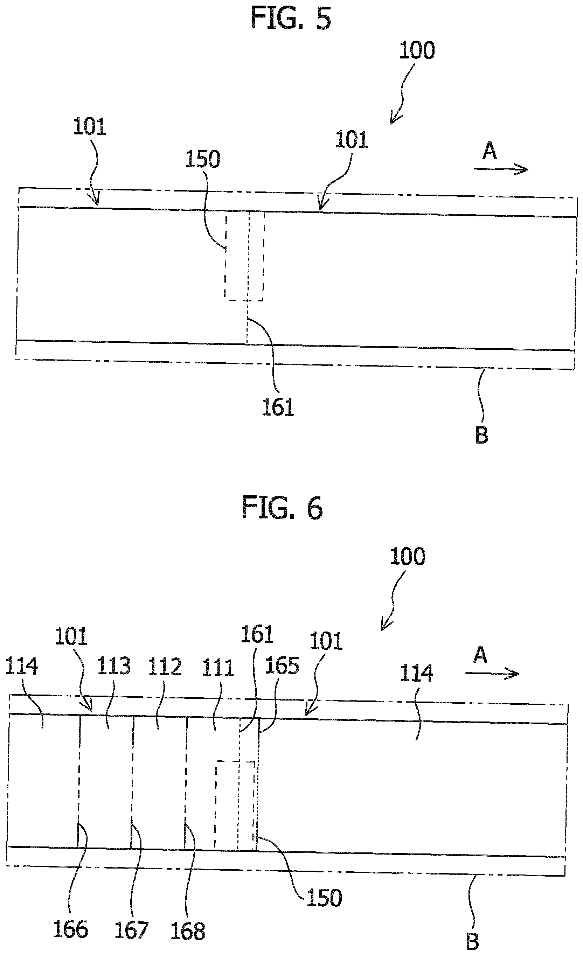

FIG. 6 illustrates another aspect of the separation lines used for forming the small pieces 111 to 113. As separation lines 166 to 168 in FIG. 6, perforated lines (notches) with the same size are provided entirely in the width direction of the label piece 101; in this point, the separation lines 166 to 168 are different from the aforementioned separation lines 162 to 164. Such notches may take a variety of forms.

The typical embodiments of the present disclosure have been described above; however, the present disclosure is not limited to these embodiments. Therefore, the scope of the present invention is limited only by the scope of claims below.

### REFERENCE SYMBOL LIST

- 100: Label
- 101: Label piece
- 111 to 113: Small piece (stub)
- 114: Main piece
- 110: Surface base-material layer
- 120: Tackiness agent layer
- 130: Glassine paper layer
- 140: Pressure-sensitive adhesive layer

## Claims

1. A linerless label for flight baggage, comprising four layers of a surface base-material layer in which a heat-sensitive coloring layer and a resin layer are integrated, a tackiness agent layer, a glassine paper layer, and a pressure-sensitive adhesive layer in this order.

2. The linerless label for flight baggage according to claim 1, wherein the four layers are provided all over the linerless label for flight baggage.

3. The linerless label for flight baggage according to claim 1, wherein a tackiness agent of the tackiness agent layer and glassine paper of the glassine paper layer are in direct contact with each other without an interposed substance therebetween, the tackiness agent of the tackiness agent layer adheres to the surface base-material layer and sticks to the glassine paper layer in such as way that peeling is possible, and a pressure-sensitive adhesive of the pressure-sensitive adhesive layer adheres to the glassine paper layer, adheres to another pressure-sensitive adhesive, and sticks to the surface base-material layer in such a way that peeling is possible.

4. The linerless label for flight baggage according to claim 3, wherein while the pressure-sensitive adhesives adhere to each other well, the pressure-sensitive adhesive does not easily adhere to other objects including surfaces of human skin, paper, clothes, and a suitcase.

5. The linerless label for flight baggage according to any one of claims 1 to 3, wherein the surface base-material layer includes a plurality of small pieces and one main piece arranged in a length direction of the surface base-material layer, between the small pieces and between the small piece and the main piece, notches are formed at both ends and fine perforated lines are formed at a central part in a width direction of the linerless label for flight baggage and the small pieces and the main piece are connected in such a way that separation is possible.

6. A roll of the linerless label for flight baggage according to claim 1, wherein a plurality of the linerless labels for flight baggage are connected with a cutoff line therebetween and wound, the cutoff line being formed by a perforated line.
